# EUROPEAN PATENT APPLICATION

(11) **EP 2 987 411 A1**
(43) Date of publication of application: **24.02.2016**
(21) Application number: 14785251.1
(22) Date of filing: 28.03.2014
(51) Int. Cl.: A23F 3/16

(54) **TEA BEVERAGE AND PREPARATION METHOD THEREFOR**

(30) Priority: 16.04.2013 CN 201310132185
(71) Applicant: Nongfu Spring Co., Ltd., Zhejiang 310024 (CN)
(72) Inventor: HAN, Zhengchun, Hangzhou Zhejiang 310024 (CN); WANG, Yongfu, Hangzhou Zhejiang 310024 (CN); ZHONG, Jiping, Hangzhou Zhejiang 310024 (CN); JIN, Jun, Hangzhou Zhejiang 310024 (CN); HUANG, Yuan, Hangzhou Zhejiang 310024 (CN); XUE, Lian, Hangzhou Zhejiang 310024 (CN)
(74) Representative: Tischner, Oliver
(86) International application number: PCT/CN2014/074236
(87) International publication number: WO 2014/169755

(57) **Abstract**

The present invention provides a tea beverage having a quality similar to that of freshly made tea and a manufacturing method thereof, characterized in that taking the water-soluble components and volatile components in tea leaves as the targets, through choosing the same or different kinds of tea leaves, using different extraction processes to respectively extract and obtain a water-soluble component extract (referred to as a first extract) in the tea leaves and a volatile component extract (referred to as a second extract) in the tea leaves, then mixing well the two extracts in a suitable amount to get a tea liquor for tea beverage production, and blending, sterilizing and canning according to conventional tea beverage production processes, so as to produce a tea beverage product having a quality similar to or even exceeding that of freshly made tea.

## Description

### Technical field of the invention

The invention relates to a tea beverage and a method for manufacturing the tea beverage. The method can balance the differences in the quality of tea beverages in different batches due to different place of origin, climate, picking time and manufacturing process, the tea beverage manufactured thereby has a coordination of taste and fragrance and pleasant quality which are similar to or better than those possessed by the freshly made tea.

### Background of the invention

Natural, healthy, fast and convenient tea beverages are increasingly becoming common beverages in daily life. As to tea beverages, it is desired that the tea beverages to be drunk have the qualities of freshly made tea, e.g., taste and fragrance. Freshly made tea is the abbreviation of the traditional drinking way of Chinese tea leaves. A certain amount of tea leaves are taken and brewed with hot water (the weight ratio of tea leaves to water is usually in the range of 1: 50 to 100) at a certain temperature (usually, being > 80 °C) for a short time period (from 30 seconds to 5 minutes), and the separated tea liquor is the freshly made tea for drinking. Tea leaves which are consumed in the way of freshly made tea in the Chinese domestic mainly are famous and excellent tea among various tea leaves. The term "famous and excellent tea" is a generalized concept, including two aspects: famous tea and excellent tea, wherein the famous tea refers to tea having a high reputation, a good quality and significant impacts on the market, and the excellent tea refers to tea having significant impacts on the market, a good quality and a high price. The most key features of the famous and excellent tea are that fresh tea leaves for making the tea are picked in early spring and have a high tenderness and abundant inclusions, and tea leaves which are obtained by various tea leaves processing techniques have the following characteristics: the content of water-soluble components and volatile components is high, the taste of the tea liquor is fresh and refreshing, mellow and thick, and fast back to sweet after taste, and the tea liquor has a high intensity of fragrance and a pleasant fragrance type. According to the Chinese grade classification of various types of tea leaves, tea leaves are classified into special grade, grade A, grade B, grade C and grade D depending on their quality from high to low, sometimes, including grade E and grade F. The tea leaves of the famous and excellent tea generally refer to tea leaves in grade A or above, and the yield of tea leaves in grade A or above is limited. Tea leaves used as raw material for the production of a tea beverage are mainly tea leaves in grade B or lower which have a high yield and a slightly inferior quality. Existing tea beverages on the market have great differences in taste and fragrance as compared with freshly made tea, particularly the fragrance, and the tea beverages almost does not have any pleasant fragrance produced by fragrant substances that are comprised in natural tea leaves in freshly made tea. Main reasons for this phenomenon are shown as follows:

### 1. Quality of tea leaves used as raw material to manufacture tea beverages

Tea leaves used as raw material to manufacture tea beverages, due to the large usage amount, are mostly staple tea leaves in low grades. Due to influence of picking seasons, environments of the place of origin, manufacturing processes and tenderness of tea leaves, few tea leaves used as raw material to manufacture tea beverages are rich and perfect in the both aspects of fragrance and taste substances. As for such tea leaves, components which exhibit taste (mainly including water soluble component such as tea polyphenols, caffeine, amino acids, and polysaccharides) may be abundant, while components which exhibit fragrance (volatile components mainly based on small molecular compounds having a strong volatility including alcohol, aldehyde, ketone, ester and oxygen-containing small molecular compounds) have a low content or the fragrance type is inferior. Alternatively, the fragrance may be superior, while the taste of the tea liquor is thin or coarse.

### 2. Restrictions of existing methods for manufacturing tea beverages

In existing methods for manufacturing a tea beverage, usually, water-soluble components (substances exhibiting the taste of tea liquor) and volatile components (substances exhibiting the fragrance of tea liquor) in tea leaves are simultaneously extracted into the tea liquor under certain extraction conditions with an one-step method in which water is used as the solvent, and the resulting tea liquor is used for making tea beverages. Since the water-soluble components in tea leaves differ greatly from volatile components in terms of content and chemical properties, it is difficult to sufficiently and simultaneously extract the desirable water soluble components and volatile components under the same extraction conditions and by the same method to an aqueous solution of tea liquor. For example, green tea is extracted at a low temperature, the water soluble components which can provide fresh and refreshing sense, particularly amino acids, are more likely to be extracted into the resulting tea liquor, while the volatile components which exhibit the fragrance will significantly lose. When a high temperature extraction is used to extract green tea, although the exaction amount of the volatile components will rise, the tea liquor obtained under this conditions will have bitter and astringent taste due to excessive dissolution out of soluble components such as tea polyphenol, caffeine, and is hardly accepted.

At the same time, after the extraction, the tea liquor should be subjected to a plurality of processing steps, including clarifying, blending, sterilizing and canning, and it is difficult to operate under full-closed condition through this whole process, which will lead to the loss of highly volatile fragrance components in the extracted tea liquor during the processing. A conventional sterilization process is a thermal treatment process, which will result in oxidation or cracking reaction of heat-sensitive volatile components and water soluble components in the tea liquor, so that the loss of fragrance and taste compounds will be further increased.

In addition, a lot of existing tea beverages are not obtained by directly extracting tea leaves, but obtained by using instant tea powder. More thermal processing procedures are carried out during the manufacture of the instant tea powder, such as tea liquor concentration, and spray drying, and in the processes, initial fragrance components in the tea liquor are almost lost at all.

In recent years, aiming at the above problem that the taste and fragrance qualities of tea beverages cannot be co-existing, a plurality of solving methods are proposed and applied, but all of them involve some disadvantages. For example,

The defect that the taste and fragrance of a kind of tea leaves used as raw material may be insufficient may be compensated by using a method of blending tea leaves. As to the same kind of tea leaves, due to the differences in place of origin, harvest season, tenderness, and processing technique, the tea leaves may have different characteristics in the taste and fragrance, and by blending tea leaves having different taste and fragrance, it is possible to obtain the raw material tea leaves which can produce a tea liquor having better taste and fragrance both. However, use of the blended tea leaves are restricted by existing extraction methods of tea beverages for the following reasons: because of differences in chemical properties of the water-soluble components exhibiting the taste and volatile components exhibiting the fragrance in tea leaves, it is difficult to sufficiently and simultaneously extract desirable water soluble components and volatile components into tea liquor under the same extraction conditions and by the same method; meanwhile, the fragrance components in the tea liquor are further lost during the plurality of processing steps. Thus, by means of existing methods for manufacturing tea beverages, even if the blended raw material tea leaves are used to produce tea beverages, the quality of the tea beverages only can be increased to a certain extent, which cannot still produce the instant-drinking tea beverages having satisfactory qualities in the taste and fragrance both. In addition, there are methods in which tea leaves are re-dried at high temperature so as to increase the content of the fragrance components therein, however the methods are restricted by existing extraction methods of tea beverages, and thus the above problems cannot be fundamentally solved.

The fragrance quality of tea beverages and instant tea powder may be improved by back-filling fragrance. Specifically, because the content of initial fragrance components in the extracted tea liquor is limited, the fragrance back-filling usually comprises the following steps: tea leaves used as raw material for extraction are comminuted with the addition of water to give a tea slurry; then a vacuum distillation equipment, a falling-film concentration equipment or spinning cone column (SCC) equipment etc. are used to extract and collect fragrance components as much as possible under mild conditions; the concentrated tea slurry is centrifugalized to obtain a clear concentrated solution of tea liquor, and the clear concentrated solution is used to prepare tea beverages or is spray dried after further concentration to give instant tea powder. The above collected fragrance components are back filled into the concentrated solution of tea liquor or instant tea powder. This method can improve the problem regarding to insufficient fragrance of tea beverages to a certain extent. However, because tea leaves have to be comminuted to prepare a tea slurry, various components in tea leaves are overly dissolved out in the tea slurry after the fragrance extraction, the water soluble components exhibiting taste therein cannot be selectively extracted according to needs, which subsequently can lead to unbalanced ratio of various water soluble components exhibiting taste in tea beverages, resulting in that the coordinated taste of freshly made tea cannot be exhibited.

Aiming at the problem regarding to the bitter and astringent taste of tea beverages, it is proposed to use polyvinylpyrrolidone (PVPP) for the adsorption of tea polyphenols in tea liquor so as to reduce the bitter and astringent taste. However, in practical applications, the inventors find out that after tea liquor is treated with PVPP adsorption, its fragrance intensity will be much reduced. That is to say, while PVPP adsorbs tea polyphenols in the tea liquor, a lot of fragrance components are also adsorbed, which leads to the loss of the fragrance.

It is possible to add essences into tea beverages. Currently, for most of tea beverages on the market, the addition of essences is used to solve the problems regarding to insufficient fragrance or inferior fragrance type. The essences may include synthetic essences and natural essences. In recent years, with the strengthening health awareness, more and more consumers begin to pay attention to the safety of food. Although synthetic essences are also safe on the premise of no excessive uses, in the consumer's awareness, tea beverages with the addition of such essences are usually classified as unhealthy foods. However, the yield of natural tea essences is limited, and the conventional extraction processes thereof usually include use of organic solvents or high temperature concentrating procedures, and thus, in tea beverages, it is difficult for these natural tea essences to exhibit taste and fragrance as those of freshly made tea.

### Summary of the invention

The objective of the invention is to provide a method for manufacturing a tea beverage, and the tea beverage produced by the method can have the coordination of taste and fragrance and pleasant sensory quality as possessed by freshly made tea.

Therefore, a first aspect of the present invention is to provide a method for manufacturing a tea beverage, comprising the following steps:
1) obtaining a first extract: extracting water soluble components in tea leaves which exhibit the characteristic taste of tea liquor by using a suitable extraction process and using water as a solvent to obtain a first extract;
2) obtaining a second extract: extracting volatile components in tea leaves or other raw materials which exhibit the characteristic fragrance of tea liquor by using a suitable extraction process with a suitable extracting solvent or medium to obtain a second extract;
3) adjusting the first and second extracts as obtained in the above steps 1) and 2) to a suitable concentration respectively, and then clarifying them; or clarifying respectively the first and second extracts, and then adjusting them to suitable concentrations;
   and then, mixing well the two extracts in a suitable ratio to obtain a tea liquor for producing a tea beverage;
4) blending, sterilizing and canning the tea liquor obtained in the step 3) with a conventional process for producing tea beverage, to obtain a tea beverage.

In one embodiment of the invention, in the method for manufacturing a tea beverage according to the first aspect of the invention, the tea leaves for extracting the first extract and the tea leaves for extracting the second extract either may be tea leaves of the same kind and coming from the same source, or may be tea leaves of the same kind while coming from different sources (including, but not limited to, different tea leaves with different places of origin, different picking season, different tenderness and different manufacturing processes), or may be tea leaves of different kinds. Preferably, the tea leaves can be selected from the group consisting of green tea, black tea, oolong tea, scented tea, Pu'er tea or secondary material produced during the productions of the above tea leaves (such as tea stalks, broken tea, yellow sifting tea), or tea leaves obtained by blending tea leaves with different sources but from the above tea leaves of the same or different kinds.

In the method for manufacturing a tea beverage according to the above first aspect of the invention, the other raw materials in the step 2) includes various edible or drinkable fresh flowers, dried flowers, herb tea, or combinations thereof, for example, jasmine flowers, rose, ghrysanthemum morifolium from Hangzhou of china, honeysuckle, genmaicha, barley tea, etc.

In one embodiment of the invention, in the method for manufacturing a tea beverage according to the first aspect of the invention, the extraction temperature to obtain the first extract is 40°C-95°C, preferably 50°C-95°C, 50°C-85°C, or 60°C-85°C.

Preferred extraction time is 1 min-1 hr, and most preferred extraction time is 5 min-45 min, 10 min-30 min, or 10 min-20 min.

Preferably, the weight ratio of tea to water is 1:20-120, and further preferably, the weight ratio of tea to water is 1:30-100, 1:40-90, 1:55-70 or 1:50-80.

In one embodiment of the invention, in the method for manufacturing a tea beverage according to the first aspect of the invention, the extraction methods for obtain the second extract can be conventional extraction methods of volatile substances, such as vacuum distillation concentration method, falling-film concentration method, spinning cone column (SCC) method, and supercritical fluid extraction method.

In one embodiment of the invention, in the method for manufacturing a tea beverage according the first aspect of the invention, the suitable extraction solvent or medium in the step 2) may be water, steam, or solvents rather than water (e.g., carbon dioxide).

In one embodiment of the invention, in the method for manufacturing a tea beverage according to in the first aspect of the invention, the tea leaves for extracting the first extract and the tea leaves or other raw materials for extracting the second extract may be suitably comminuted before extraction according to the extraction process, and then are subjected to extraction. Preferably, the tea leaves or other material are comminuted to a particle size ≤ 1 mm.

In one embodiment of the invention, in the method for manufacturing a tea beverage according to the first aspect of the invention, the clarifying in the step 3) includes, but not limited to, conventional low temperature cooling and standing, centrifugalization, membrane filtration, etc.

In one embodiment of the invention, in the method for manufacturing a tea beverage according to the first aspect of the invention, the blending in the step 4) includes, but not limited to, conventional dilution of tea liquor, addition of antioxidants, acidity regulators and other food additives, and addition of food ingredients. Said antioxidants may be vitamin C, sodium isoascorbate, etc. Said acidity regulators may be sodium bicarbonate, phosphate, etc. The dosage of the acidity regulators depends on actual situations, and it is preferred that the pH value of the tea beverage is adjusted to range from 5.5 to 6.5.

In one embodiment of the invention, in the method for manufacturing a tea beverage according the first aspect of the invention, the sterilizing in the step 4) includes, but not limited to, conventional ultra high temperature treatment (UHT), and pasteurization.

In one embodiment of the invention, in the method for manufacturing a tea beverage according to the first aspect of the invention, when the tea leaf used as raw material is green tea, the ratio of phenol to ammonia in the first extract is less than 8, and the fragrance index (FI) value of the second extract is close to the FI value of freshly made tea; when the tea leaf used as raw material is jasmine tea, the FI value of the second extract is higher than the FI value of freshly made tea; when the tea leaf used as raw material is the oolong tea, the FI value of the second extract is higher than the FI value of freshly made tea.

The second aspect of the present invention provides a tea beverage which is produced by the method for manufacturing a tea beverage according to the first aspect of the invention.

As compared with conventional manufacturing methods of tea beverages, the manufacturing method of the invention can balance the differences in the quality of tea beverages in different batches due to place of origin, climate, picking time and manufacturing process, the resulted tea beverage has coordination of taste and fragrance and pleasant quality which are similar to or better than those possessed by freshly made tea. The invention is characterized in that the water soluble components exhibiting the taste of the tea liquor and the volatile components exhibiting the fragrance of the tea liquor are extracted respectively from the tea leaves by using different extraction methods and extraction conditions and using tea leaves of the same or different kinds, and then the two kinds of the components are mixed evenly in a certain ratio to obtain a tea liquor for producing a tea beverage. The tea liquor manufactured by the method of the invention is used to produce a tea beverage, can overcome the defects of existing producing methods of tea beverages as mentioned in the preceding text, and the advantages of the method of the invention are described in detail as follows:
Components exhibiting taste of a tea liquor are mostly water soluble compounds, the content of which is high in tea leaves, and which are easily to be dissolved out. Components exhibiting fragrance of a tea liquor are mostly volatile compounds having a low molecular weight and a low solubility in water, the content of which is low in tea leaves. Thus, when water is used as a solvent to extract the two kinds of compounds, the extraction conditions required for each of them are greatly different. The method of the invention adopts respective optimum extraction methods and conditions to extract respectively the two kinds of compounds, which can avoid the problem caused by simultaneous extraction of the two kinds of compounds, such as the extraction of the two kinds of compounds is both incomplete, or the taste and fragrance of the tea liquor is discordance due to the excessive extraction of a kind of compounds,. When the water soluble components are extracted, the extraction conditions are optimized to obtain the high content of the components exhibiting the characteristic taste of the tea liquor or the good tea liquor taste as determined by sensory evaluation methods. When the volatile components are extracted, the extraction methods and conditions are optimized to obtain the high content of the components exhibiting the characteristic fragrance of the tea liquor and the good fragrance type as determined by sensory evaluation methods.

Another advantage of the method of the present invention is that there are more choices for tea leaves used as raw material for the production of tea beverages. Since compounds exhibiting the characteristic taste of the tea liquor and compounds exhibiting the characteristic fragrance of the tea liquor are not required to be extracted at the same extraction conditions and from the same tea leaves, the requirements on tea leaves used as raw material may be lowered, that is, advantages of each kind of tea leaves may be selected and disadvantages thereof may be avoided. For example, in a tea leaf A used as raw material, if the content of water soluble components exhibiting good taste is high, but the fragrance of which is insufficient, or fragrance type of which is inferior, it can be used alone as the raw material for extracting the first extract of tea leaves of the invention. Then, another raw material tea leaf B with a high content of volatile components exhibiting the characteristic fragrance and a good fragrance type may be selected for extracting the second extract of the invention.

The method of the invention can also overcome the problem that the product quality is declined due to the loss of taste and fragrance of the tea liquor during manufacturing a tea beverage with existing methods. The first and second extracts of tea leaves which are extracted respectively may be freely blended according to needs. Specifically, by means of simple conventional experiments, the loss amounts of the water soluble components exhibiting the taste of tea liquor and volatile components exhibiting the fragrance of tea liquor during manufacturing a tea beverage can be beforehand known, and after evaluations and calculations, the mixing ratio of the two extracts may be precisely adjusted according to finally desired taste and fragrance of the finished tea beverage product, so as to eliminate impacts of the loss of the flavor components during the manufacturing processes on the quality of the finished tea beverage product.

The method for manufacturing a tea beverage of the invention can be carried out by combining existing tea beverages production techniques and tea fragrance extraction or recovery techniques and equipments, and can easily achieve a large scale production of tea beverage.

According to the method for manufacturing a tea beverage of the invention, the first extract exhibiting the taste of tea can be extracted by using existing tea leaves extraction equipment, for example, common closed extraction tank and reversible basket-type extraction equipment; and the extraction parameters, e.g., water temperature, impregnating time, stirring speed and other relevant conventional parameters, can be optimized on the basis of preferred tea leaves, so that the first extract may exhibit the good taste of the tea leaves, that is, the content of one or more water soluble components therein are increased or in a suitable ratio. For example, the content ratio of tea polyphenols to amino acids (abbreviated as the phenol to ammonia ratio) in tea liquor is usually used to characterize the taste of a green tea liquor, and generally, when a ratio of phenol to ammonia in a green tea liquor is < 8, the green tea liquor is considered to have the taste of fresh made tea, such as the characteristic taste of fresh and refreshing, mellow and thick, and sweet. As to this type of tea leaves, the lower the ratio of phenol to ammonia in tea liquor is, the better the taste of the tea liquor will be. The following Table 1 shows the measured ratios of phenol to ammonia ratios in the green tea beverage produced by the method of the present invention(Example 1) and the green tea beverages produced by conventional methods(Comparative Examples 1-1, 1-2, 1-3, corresponding to product 1'-1, product 1'-2, and product 1'-3).

**Table 1: Measured ratios of phenol to ammonia in green tea beverage**

| Product | Product 1 | Product 1'-1 | Product 1'-2 | Product 1'-3 | Freshly made tea 1 |
|---|---|---|---|---|---|
| Ratio of phenol to ammonia | 7.1 | 9.6 | 8.5 | 11.2 | 6.5 |

| | | | | | |
|---|---|---|---|---|---|
| (Note: the method for calculating the ratios of phenol to ammonia in the above table are described as follows: the contents of tea polyphenols and amino acids in various tea beverages are respectively measured, and the ratio of phenol to ammonia = the content of tea polyphenols/the content of amino acids, the contents of the tea polyphenols are measured according to the National Standard of the People's Republic of China GB/T21733-2008 (Method for determining tea polyphenols content in tea beverage), and the contents of the amino acids are measured according to the National Standard of the People's Republic of China GB/T8314-2002 (Method for determining total free amino acids in tea); the tea leaves used for the freshly made tea 1 in the above table and the raw material green tea leaves B as selected in Example 1 are special grade green tea having the same fragrance type). | | | | | |

According to the method of manufacturing tea beverage of the invention, the second extract can be extracted by using conventional equipment for extracting some volatile components, such as a vacuum distillation concentration equipment, a falling-film concentration equipment and a spinning cone column (SCC), a supercritical fluid extraction equipment, and the extraction parameters may be adjusted on the basis of preferred raw material tea leaves having a good fragrance type, so that the volatile components exhibiting the characteristic fragrance of the tea liquor in the tea leaves may be sufficiently extracted. Furthermore, the extraction parameters may be optimized so that the ratio of various volatile components is suitable so as to exhibit a good fragrance type, for example, the volatile components can have the characteristic of a high fragrance index, thereby to achieve the fragrancy quality of freshly made tea.

The term "fragrance index" as described in the invention, abbreviated as FI, represents the ratio of the total amount of high boiling-point components to the total amount of low boiling-point components in the fragrance components. In the analyses of the fragrance component, fragrance components having a retention time shorter than that of linalool are deemed as the low boiling-point fragrance components, and fragrance components having a retention time longer than that of linalool are deemed as the high boiling-point fragrance components. The FI index may be used for qualitatively analyzing the fragrance of tea leaves, and for the same kind of tea leaves, tea leaves having a high FI have a better fragrance type than tea leaves having a low FI.

The following table 2 shows the measured FI values of various tea beverage products produced by the method of the invention (Examples 1, 2, 3 and 4, corresponding to green tea product 1, jasmine tea product 2, oolong tea product3, and black tea product 4), various tea beverage products produced by conventional methods (Comparative Examples 1-1, 1-2, 1-3, 2, 3, 4, corresponding to green tea product 1'-1, green tea product 1'-2, green tea product 1'-3, jasmine tea product 2', oolong tea product 3', and black tea product 4') and various freshly made tea. As seen from the data as shown in Table 2, as compared with tea beverages made by conventional methods, the tea beverages as produced by the method of the invention have a better fragrance type.

**Table 2:**

| Kind of tea beverage | Product | FI index |
|---|---|---|
| Green tea | Product 1 | 0.6419 |
| | Product 1'-1 | 0.2576 |
| | Product 1'-2 | 0.2158 |
| | Product 1'-3 | 0.3233 |
| | Freshly made tea 1 | 0.6448 |
| Jasmine tea | Product 2 | 6.772 |
| | Product 2' | 2.159 |
| | Freshly made tea 2 | 4.275 |
| Oolong tea | Product 3 | 0.7755 |
| | Product 3' | 0.5103 |
| | Freshly made tea 3 | 0.6788 |
| Red tea | Product 4 | 0.5873 |
| | Product 4' | 0.2257 |
| | Freshly made tea 4 | 0.7865 |

| | | |
|---|---|---|
| (Note: the methods for determining and calculating the FI index in the above table are described as follows: the kinds and contents of the fragrance components in each tea beverage are determined respectively by a gas chromatography-mass spectrometer (GC-MS), the retention time point of the linalool are determined in the mass spectrum, and then the FI index is calculating according to its definition). | | |

The tea leaves used to make the freshly made tea 1 in the above Table 2 and the green tea leaves B used as raw material in Example 1 are both green tea leaves in special grade and having the same fragrance type; the tea leaves used to make the freshly made tea 2 and the jasmine tea leaves A used as raw material in Example 2 are both jasmine tea leaves in special grade and having the same fragrance type; the tea leaves used to make the freshly made tea 3 and the oolong tea leaves B used as raw material in Example 3 are both oolong tea leaves in grade A and having the same fragrance type; and tea leaves used to make the freshly made tea 4 and the black tea leaves B used as raw material in Example 4 are both black tea leaves in grade A and having the same fragrance type.

The differences in the taste and fragrance of tea liquor between the tea beverage products manufactured by the method for manufacturing a tea beverage of the invention and the tea beverage products made by conventional methods for manufacturing a tea beverage can be determined from the sensory evaluation score results as shown in Table 3. It can be seen that the tea beverage products manufactured by the method of the invention have a similarity of more than 9.0 with freshly made tea, and the tastes thereof are closer to freshly made tea.

Products 1, 2, 3, 4 are the tea beverage products produced by the method of the invention, which are respectively from Examples 1, 2, 3 and 4.

Product 1'-1, 1'-2, 1'-3, 2', 3', 4' are the tea beverage products produced by conventional manufacturing methods of a tea beverage, which are respectively from Comparative Examples 1-1, 1-2, 1-3, 2, 3, 4.

**Table 3**

| The kind of tea beverage | Scores of sensory attributes | Coordination of fragrance and taste | Taste | | Fragrance | | Similarity to freshly made tea |
|---|---|---|---|---|---|---|---|
| | | | Quality | Intensity | Quality | Intensity | |
| Green tea | product 1 | 9.0 | 8.3 | 8.5 | 9.1 | 8.9 | 9.1 |
| | product 1'-1 | 6.5 | 7.1 | 8.2 | 6.2 | 6.0 | 6.3 |
| | product 1'-2 | 6.1 | 8.2 | 8.6 | 6.0 | 4.1 | 5.4 |
| | product 1'-3 | 5.9 | 4.6 | 9.1 | 8.9 | 8.6 | 5.9 |
| Jasmine tea | product 2 | 9.6 | 8.8 | 8.2 | 9.1 | 10.0 | 9.8 |
| | product 2' | 7.4 | 7.8 | 8.0 | 7.1 | 5.7 | 6.1 |
| Oolong tea | product 3 | 8.9 | 8.6 | 8.7 | 9.0 | 9.5 | 9.2 |
| | product 3' | 6.2 | 6.4 | 7.7 | 8.2 | 6.0 | 6.7 |
| Black tea | product 4 | 9.1 | 8.6 | 8.5 | 9.1 | 8.9 | 9.0 |
| | product 4' | 6.1 | 7.8 | 7.6 | 7.0 | 5.8 | 5.7 |

| | | | | | | | |
|---|---|---|---|---|---|---|---|
| (Note: The result in the above table are from ten sensory evaluation experts, and each evaluation index is scored based on a ten-point system, and the values as listed in the above table are the average scores of the values in each group after removing the highest score and the lowest score. The each freshly made tea is obtained by brewing famous and excellent tea leaves of the same kind as the raw material tea leaves used in the above examples). | | | | | | | |

### Embodiment

The invention is further described in detail by the following examples. However, a person skilled in the art would understand that the following examples are only used to illustrate the invention, and should not be deemed as restriction of the scope of the invention. In the examples, when specific conditions are not specified, the examples are carried out according to conventional conditions or conditions suggested by manufacturers. When used devices are not specified with manufacturers, they are conventional products which can be commercially available on the market.

### Example 1: green tea beverage 1

After tea leaves used as raw material were evaluated and selected, the tea liquor of the green tea A (pan-fired green tea in grade B) had a mellow and thick, fresh and refreshing taste and a good fragrance type, while the intensity of fragrance thereof was significantly insufficient. Thus, 50 kg of the green tea A was used as the raw material for extracting the first extract, and the following extraction conditions were selected by experiments: deionic water was used as the solvent, the weight ratio of tea to water was 1:70, and the extraction was conducted at 60°C for 20 min. The resulting extraction solution was cooled and standing, and then was centrifugated, to get 3.6 tons of clear first extract.

Meantime, after tea leaves used as raw material were evaluated and selected, the green tea B (pan-fired green tea in grade C) had a good fragrance type and a high content of the fragrance, while the contents of taste components in the tea liquor thereof were low, and the taste of the tea liquor thereof was thin. Thus, 50 kg of the green tea B was used as the raw material for extracting the second extract, and after experiments, a SCC-1000 spinning cone column was used to extract the fragrance components, the extraction parameters were as follows: tea leaves were comminuted to a particle size ≤ 1 mm, and then the comminuted tea leaves were mixed with water to produce a tea slurry in a ratio that the weight of dry tea leaves was 9% of the total weight of the resulting tea slurry, during the extraction, the temperature at the top of the column was 75 °C, the feeding temperature was 55 °C, the flow rate of tea slurry was 360 kg/hr; the flow rate of the steam for extracting was 4.0% of the flow rate of tea slurry, the temperature of cooling water was 10±2 °C. 10.8 kg of second extract was obtained.

The weight ratio of the above resulting first and second extracts was determined by experiments, the finally determined weight ratio of the first extract to the second extract was 350:1, and could maintain coordination of taste and fragrance of the finished tea beverage products and provide sufficient fragrance intensity. After the two extracts were mixed well in the ratio, water was added to dilute the mixture to a constant weight of 10 tons, and then, vitamin C as antioxidant was added in the diluted mixture in the amount of 0.02% (kg/kg) of the total constant weight, and an appropriate amount of sodium dicarbonate was added to adjust the pH value to 5.5-6.5, to get a mixed solution. The mixed solution was sterilized by UHT at 137 °C for 10 seconds, and then, was aseptically canned with bottles made of polyethylene terephthalate (PET bottles), to get a finished tea beverage product 1.

### Comparative Example 1-1: green tea beverage

Green tea A and green tea B in Example 1 was taken and mixed in a ratio of 1:1, and 60 kg of the mixed tea leaves were used as raw material for extracting tea liquor. Deionic water was used as the solvent, the weight ratio of tea to water was 1:60, and the extraction was conducted at 75 °C for 15 min, the resulting extraction solution was cooled and standing and then centrifugated, to get 3.8 tons of the tea liquor. Water was added to the tea liquor until the constant weight was 11.5 tons, and then, vitamin C as antioxidant was added in the amount of 0.02% (kg/kg) of the total constant weight, and an appropriate amount of sodium dicarbonate was added to adjust the pH value to 5.5-6.5, to get a mixed solution. the mixed solution was sterilized by UHT at 137 °C for 10 seconds, and then, was aseptically canned with PET bottles, to get a finished tea beverage product 1'-1.

### Comparative Example 1-2: green tea beverage

60 kg of the green tea A in Example 1 was used as raw material for extracting tea liquor. Deionic water was used as the solvent, the weight ratio of tea to water was 1:70, the extraction was conducted at 70 °C for 20 min. The resulting extraction solution was cooled and standing and then centrifugated, to get 4.3 tons of the clear tea liquor. Water was added to the tea liquor until the constant weight was 12.0 tons, and then, vitamin C as antioxidant was added in the amount of 0.02% (kg/kg) of the total constant weight, and an appropriate amount of sodium dicarbonate was added to adjust the pH value to 5.5-6.5, to get a mixed solution. The mixed solution was sterilized by UHT at 137 °C for 10 seconds, and then, was aseptically canned with PET bottles, to get a finished tea beverage product 1'-2.

### Comparative Example 1-3: green tea beverage

The green tea B in Example 1 was used as raw material for producing a tea beverage, and the tea beverage was produced by fragrance back-filling method. 50 kg of the green tea B was extracted to get the fragrance components by using a SCC-1000 spinning cone column according to the method for extracting the second extract in the above Example 1, and the extraction parameters were as follows: tea leaves were comminuted to a particle size ≤ 1 mm, and then the comminuted tea leaves were mixed with water to produce a tea slurry in a ratio that the weight of dry tea leaves was 9% of the total weight of the resulting tea slurry. During the extraction, the temperature at the top of the column was 75 °C, the feeding temperature was 55 °C, the flow rate of the tea slurry was 360 kg/hr, the flow rate of the steam was 4.0% of the flow rate of the tea slurry, the temperature of cooling water was 10±2 °C, to get 10.8 kg of the aqueous extraction solution of the fragrance substances in the tea liquor. Meantime, during the extraction of the fragrance, the discharged concentrated tea slurry solution was centrifugated to remove tea residues, to get 600 kg of a clear concentrated solution of tea liquor.

All the 10.8 kg above aqueous extraction solution of the fragrance substances in the tea liquor was back filled into 600 kg of the concentrated solution of the tea liquor, to get tea liquor for the production of a tea beverage. Water was added into the tea liquor until the constant weight was 13.5 tons, and then, vitamin C as antioxidant was added in the amount of 0.02% (kg/kg) of the total constant weight, and an appropriate amount of sodium dicarbonate was added to adjust the pH value to 5.56.5, to get a mixed solution. The mixed solution was sterilized by UHT at 137 °C for 10 seconds, and then, was aseptically canned with PET bottles, to get a finished tea beverage product 1'-3.

### Example 2: jasmine tea beverage

After tea leaves used as raw material were evaluated and selected, the tea liquor of the jasmine tea A (jasmine tea in grade B) had a mellow and thick, fresh and refreshing taste and a good fragrance type, while the intensity of fragrance thereof was insufficient. Thus, 50 kg of the jasmine tea A was used as raw material for extracting of the first extract of, and the following extraction conditions were selected by experiments: deionic water was used as the solvent, the weight ratio of tea to water was 1:55, and the extraction was conducted at 75 °C for 15 min. The resulting extraction solution was cooled and standing, and then was centrifugated, to get 2.9 tons of clear first extract.

Meantime, 50 kg of the jasmine tea A was used as raw material for extracting the second extract, and after experiments, a single-effect concentrator was use to extract the fragrance components, the extraction parameters were as follows: tea leaves was comminuted to a particle size ≤ 1 mm, and then the comminuted tea leaves were mixed with water to produce a tea slurry in a ratio that the weight of dry tea leaves was 1.5% of the total weight of the resulting tea slurry, during the extraction, the vacuum degree of the system was -0.085 MPa; the temperature of internal materials was 50 °C; the temperature of cooling water was 10±2 °C. 900 kg of second extract was obtained.

The weight ratio of the above resulting first and second extracts was determined by experiments, the finally determined weight ratio of the first extract to the second extract was 3:1, and could maintain coordination of taste and fragrance of the finished tea beverages and provide sufficient fragrance intensity. After the two extracts were mixed well in the ratio, water was added to dilute the mixture to a constant weight of 12 tons, and then, vitamin C as antioxidant was added in the amount of 0.02% (kg/kg) of the total constant weight, and an appropriate amount of sodium dicarbonate was added to adjust the pH value to 5.5-6.5, to get a mixed solution. The mixed solution was sterilized by UHT at 137 °C for 10 seconds, and then, was aseptically canned with PET bottles, to get a finished tea beverage product 2.

### Comparative Example 2: jasmine tea beverage

60 kg of the jasmine tea A in Example 2 was used as raw material for extracting a tea liquor. Deionic water was used as the solvent, the weight ratio of tea to water was 1:65, and the extraction was conducted at 85 °C for 15 min. The resulting extraction solution was cooled and standing and then centrifugated, to get 4.0 tons of the clear tea liquor. Water was added into the tea liquor until the constant weight was 13.5 tons, and then, vitamin C as antioxidant was added in the amount of 0.02% (kg/kg) of the total constant weight, and an appropriate amount of sodium dicarbonate was added to adjust the pH value to 5.5-6.5, to get a mixed solution. The mixed solution was sterilized by UHT at 137 °C for 10 seconds, and then, was aseptically canned with PET bottles, to get a finished tea beverage product 2'.

### Example 3: oolong tea beverage

After tea leaves used as raw material were evaluated and selected, the tea liquor of the oolong tea A (intensively fragrant Tieh-Kuan-Yin tea in grade B) had a heavy and strong, fresh and refreshing taste, while the fragrance type thereof was not good. Thus, 50 kg of the oolong tea A was used as raw material for extracting the first extract, and the following extraction conditions were selected by experiments: deionic water was used as the solvent, the weight ratio of tea to water was 1:60, and the extraction was conducted at 80 °C for 12 min. The resulting extraction solution was cooled and standing, and then was centrifugated, to get 3.1 tons of clear first extract.

Meantime, after tea leaves used as raw material were evaluated and selected preferably, the oolong tea B (intensively fragrant Tieh-Kuan-Yin tea in grade D) had a good fragrance type and a high content of the fragrance, while the taste of the tea liquor thereof was harsh and astringent. Thus, 50 kg of the oolong tea B was used as raw material for extracting the second extract, and after experiments, a SCC-1000 spinning cone column was used to extract the fragrance components, the extraction parameters were as follows: tea leaves were comminuted to a particle size ≤ 1 mm, and then the comminuted tea leaves were mixed with water to produce a tea slurry in a ratio that the weight of dry tea leaves was 9.5% of the total weight of the resulting tea slurry, during the extraction, the temperature at the top of the column was 75 °C, the feeding temperature was 74 °C, the flow rate of tea slurry was 500 kg/hr; the flow rate of the steam for extracting was 2.5% of the flow rate of the tea slurry, the temperature of cooling water was 10±2 °C. 12.5 kg of second extract was obtained.

The of weight ratio of the above resulting first and second extracts was determined by experiments, the finally determined weight ratio of the first extract to the second extract was 250:1, and could maintain coordination of taste and fragrance of the finished tea beverage and provide sufficient fragrance intensity. After the two extracts were mixed well in the ratio, water was added to dilute the mixture to a constant weight of 10.9 tons, and then, vitamin C as antioxidant was added in the amount of 0.02% (kg/kg) of the total constant weight, and an appropriate amount of sodium dicarbonate was added to adjust the pH value to 5.5-6.5, to get a mixed solution. The mixed solution was sterilized by UHT at 137 °C for 10 seconds, and then, was aseptically canned with PET bottles, to get a finished tea beverage product 3.

### Comparative Example 3: oolong tea beverage

60 kg of the oolong tea B in Example 3 was used as raw material for extracting tea liquor. Deionic water was used as the solvent, the weight ratio of tea to water was 1:60, and the extraction was conducted at 85 °C for 15 min. The resulting extraction solution was cooled and standing and then centrifugated, to get 3.7 tons of clear tea liquor. Water was added into the tea liquor until the constant weight was 12.5 tons, and then, vitamin C as antioxidant was added in the amount of 0.02% (kg/kg) of the total constant weight, and an appropriate amount of sodium dicarbonate was added to adjust to the pH value to 5.56.5, to get a mixed solution. The mixed solution was sterilized by UHT at 137 °C for 10 seconds, and then, was aseptically canned with PET bottles, to get a finished tea beverage product 3'.

### Example 4: black tea beverage

After tea leaves used as raw material were evaluated and selected preferably, the tea liquor of the black tea A (unshredded black tea in grade C) had a heavy and strong, fresh and refreshing taste and a good fragrance type, while the fragrance intensity thereof was significantly insufficient. Thus, 50 kg of the black tea A was used as raw material for extracting the first extract, and the following extraction conditions were selected by experiments: deionic water was used as the solvent, the weight ratio of tea to water was 1:70, and the extraction was conducted at 85 °C for 10 min. The resulting extraction solution was cooled and standing, and then was centrifugated, to get 3.6 tons of clear first extract.

Meantime, after tea leaves used as raw material were evaluated and selected, the black tea B (unshredded black tea in grade B) had a good fragrance type and a high content of the fragrance, while the taste of the tea liquor was not sufficiently heavy and strong, fresh and refreshing. Thus, 50 kg of black tea B was used as raw material for extracting the second extract, and after experiments, a single-effect falling-film concentrator was used to extract the fragrance components, the extraction parameters were as follows: tea leaves were comminuted to particle size ≤ 1 mm, and then the comminuted tea leaves were mixed with water to produce a tea slurry in a ratio that the weight of dry tea leaves was 2% of the total weight of the resulting tea slurry, during the extraction, the temperature of the materials was 75 °C, the vacuum degree of the system was -0.085 MPa, the evaporation rate of the steam was 2 ton/h, the tea slurry was recycled for 5 times in the interior of the system to extract the fragrance components, the temperature of cooling water was 10±2 °C, 510 kg of second extract was collected.

The weight ratio of the above resulting first and second extracts was determined by experiments, the finally determined weight ratio of the first extract to the second extract was 5:1, and could maintain coordination of taste and fragrance of the finished tea beverage and provide sufficient fragrance intensity. After the two extracts were mixed well in the ratio, water was added to dilute the mixture to a constant weight of 9.5 tons, and then, vitamin C as antioxidant was added in the amount of 0.02% (kg/kg) of the total constant weight, and an appropriate amount of sodium dicarbonate was added to adjust the pH value to 5.5-6.5, to get a mixed solution. The mixed solution was sterilized by UHT at 137 °C for 10 seconds, and then, was aseptically canned with PET bottles, to get a finished tea beverage product 4.

### Comparative Example 4: black tea beverage

60 kg of the black tea A in Example 4 was used as raw material for extracting a tea liquor. Deionic water was used as the solvent, the weight ratio of tea to water was 1:60; and the extraction was conducted at 85 °C for 15 min. The resulting extraction solution was cooled and standing and then centrifugated, to get 3.7 tons of clear tea liquor. Water was added into the tea liquor until the constant weight was 12.0 tons, and then, vitamin C as antioxidant was added in the amount of 0.02% (kg/kg) of the total constant weight, and an appropriate amount of sodium dicarbonate was added to adjust the pH value to 5.5-6.5, to get a mixed solution. The mixed solution was sterilized by UHT at 137 °C for 10 seconds, and then, was aseptically canned with PET bottles, to get a finished tea beverage product 4'.

## Claims

1. A method for manufacturing a tea beverage, comprising the steps of:
1) obtaining a first extract: extracting water soluble components in tea leaves which exhibit the characteristic taste of tea liquor by using a suitable extraction process and using water as a solvent to obtain a first extract;
2) obtaining a second extract: extracting volatile components in tea leaves or other raw materials which exhibit the characteristic fragrance of tea liquor by using a suitable extraction process with a suitable extracting solvent or medium to obtain a second extract;
3) adjusting the first and second extracts as obtained in the above steps 1) and 2) to a suitable concentration respectively, and then clarifying them; or clarifying respectively the first and second extracts, and then adjusting them to suitable concentrations;
and then, mixing well the two extracts in a suitable ratio to obtain a tea liquor for producing a tea beverage; and
4) blending, sterilizing and canning the tea liquor obtained in the step 3) with a conventional process for producing tea beverage, to obtain a tea beverage.

2. The method for manufacturing a tea beverage according to claim 1, wherein the tea leaves for extracting the first extract and the tea leaves for extracting the second extract either may be tea leaves of the same kind and coming from the same source, or may be tea leaves of the same kind while coming from different sources (including, but not limited to, different tea leaves with different places of origin, different picking season, different tenderness and different manufacturing processes), or may be tea leaves of different kinds.

3. The method for manufacturing a tea beverage according to claim 1 or 2, wherein the tea leaves is selected from the group consisting of green tea, black tea, oolong tea, scented tea, Pu'er tea, secondary material produced during the production of the above tea leaves (such as tea stalks, broken tea, yellow sifting tea), and tea leaves obtained by blending tea leaves with different sources but from the above tea leaves of the same or different kinds.

4. The method for manufacturing a tea beverage according to any one of claims 1-3, wherein the extraction temperature for obtaining the first extract is 40°C-95°C, preferably 50°C-95°C, 50°C-85°C, or 60°C-85°C;
preferred extraction time is 1 min-1 hr, and most preferred extraction time is 5 min-45 min, 10 min-30 min, or 10 min-20 min;
preferably, the weight ratio of tea to water is 1:20-120, and further preferably, the weight ratio of tea to water is 1:30-100, 1:40-90, 1:55-70 or 1:50-80.

5. The method for manufacturing a tea beverage according to any one of claims 1-4, wherein the extraction methods for obtaining the second extract are conventional extraction methods of volatile substances, such as vacuum distillation concentration method, falling-film concentration method, spinning cone column (SCC) method, and supercritical fluid extraction method.

6. The method for manufacturing a tea beverage according to any one of claims 1-5, wherein said other raw materials in the step 2) includes various edible or drinkable fresh flowers, dried flowers, herb tea, or combinations thereof, for example, jasmine flowers, rose, ghrysanthemum morifolium from Hangzhou of china, honeysuckle, genmaicha, barley tea.

7. The method for manufacturing a tea beverage according to any one of claims 1-5, wherein said suitable extraction solvent or medium in the step 2) is water, steam, or solvents rather than water (e.g., carbon dioxide).

8. The method for manufacturing a tea beverage according to any one of claims 1-7, wherein the tea leaves for extracting the first extract and the tea leaves or other raw materials for extracting the second extract may be suitably comminuted before extraction according to the extraction process, and then are subjected to extraction.

9. The method for manufacturing a tea beverage according to any one of claims 1-7, wherein the clarifying in the step 3) is conventional low temperature cooling and standing, centrifugalization, or membrane filtration.

10. The method for manufacturing a tea beverage according to any one of claims 1-7, wherein the blending in the step 4) includes conventional dilution of tea liquor, addition of antioxidants, acidity regulators and other food additives, addition of food ingredients.

11. The method for manufacturing a tea beverage according to any one of claims 1-7, wherein the sterilizing in the step 4) includes, but not limited to, conventional ultra high temperature treatment, and pasteurization.

12. The method for manufacturing a tea beverage according to any one of claims 1-7, **characterized in that** when the tea leaf used as raw material is green tea, the ratio of phenol to ammonia in the first extract is less than 8, and the FI value of the second extract is close to the FI value of freshly made tea; when the tea leaf used as raw material is jasmine tea, the FI value of the second extract is higher than the FI value of freshly made tea; when the tea leaf used as raw material is the oolong tea, the FI value of the second extract is higher than the FI value of freshly made tea.

13. A tea beverage as produced by the method for manufacturing a tea beverage according to claims 1-12.
